# EUROPÄISCHE PATENTSCHRIFT

(11) **EP 0 734 116 B1**
(45) Veröffentlichungstag und Bekanntmachung des Hinweises auf die Patenterteilung: **20.09.2000**
(21) Anmeldenummer: 96104038.3
(22) Anmeldetag: 14.03.1996
(51) Int. Cl.: H02P 7/00, B25B 21/00, B25B 23/147

(54) **Verfahren und Schaltungsanordnung zum Betrieb eines Elektromotors**
Electrical motor control device and method
Procédé et dispositif pour le pilotage d'un moteur électrique

(30) Priorität: 24.03.1995 DE 19510410
(43) Veröffentlichungstag der Anmeldung: 25.09.1996
(73) Patentinhaber: Marquardt GmbH, 78604 Rietheim-Weilheim (DE)
(72) Erfinder: Walz, Hubert, 78564 Wehingen (DE)
(74) Vertreter: Patentanwälte Eisele, Otten, Roth & Dobler

(56) Entgegenhaltungen:
- EP-A- 0 345 539
- EP-A- 0 403 460
- EP-A- 0 784 884
- GB-A- 2 213 291
- US-A- 5 038 084
- PATENT ABSTRACTS OF JAPAN Bd. 15, Nr. 85 (M-1087) 27 Februar 1991 & JP-A-02 303 774 (YASKAWA ELECTRIC) 17 Dezember 1990

## Beschreibung

Die Erfindung betrifft ein Verfahren zum Betrieb eines Elektromotors sowie eine zugehörige Schaltungsanordnung. Der nächstliegende Stand der Technik hierfür ist aus der vom selben Anmelder stammenden EP-A-0723333, die unter die Bestimmungen des Artikels 54(3) EPÜ fällt, bekannt.

Elektrohandwerkzeuge, wie Bohrmaschinen, Akku-Bohrmaschinen, Elektroschrauber o. dgl., sind häufig mit einer Ansteuerung für den Elektromotor ausgestattet, mit deren Hilfe der Elektromotor mit einer bestimmten Drehzahl betreibbar ist. In der Regel ist die Drehzahl in gewissen Grenzen durch den Benutzer variabel einstellbar und kann so dem jeweiligen zu bearbeitenden Material angepaßt werden. Es ist weiter bekannt, diese Ansteuerung derart auszugestalten, daß der Elektromotor bei Erreichen eines durch den Benutzer voreingestellten Drehmoments von der Ansteuerung abgeschaltet wird. Ein derartiger Betrieb des Elektromotors ist aus der DE-OS 38 19 166 bzw. EP-A-345539 bekannt und wird beispielsweise im Schraubbetrieb angewandt, wo mehrere Schrauben mit demselben Drehmoment eingedreht werden sollen.

Die in dieser Offenlegungsschrift gezeigte Schaltungsanordnung zum Betrieb des Elektromotors besitzt einen ansteuerbaren Leistungshalbleiter, der als elektronischer Schalter zum Anlegen der Betriebsspannung oder von Pulsen der Betriebsspannung an den Elektromotor dient, so daß der Elektromotor mit einer bestimmten Drehzahl läuft. Zur Ansteuerung des Leistungshalbleiters ist eine integrierte Ansteuerungsschaltung vorhanden, die einen mit dem Steuereingang des Leistungshalbleiters verbundenen Ausgang besitzt. Die Ansteuerungsschaltung besitzt einen ersten Eingang, an dem eine Potentiometerschaltung angeschlossen ist. Die an der Potentiometerschaltung variabel einstellbare Spannung repräsentiert einen Sollwert für die jeweils einzustellende Drehzahl. Weiter besitzt die Ansteuerschaltung einen zweiten Eingang zum Anschluß einer ebenfalls aus einer Potentiometerschaltung bestehenden Einrichtung zur Voreinstellung einer weiteren Spannung, die das Grenzdrehmoment als Sollgröße repräsentiert. An einem dritten Eingang der Ansteuerschaltung ist eine Einrichtung zur Messung einer Ist-Größe, die dem durch den Elektromotor fließenden elektrischen Strom entspricht, angeordnet. Da der elektrische Strom dem am Elektromotor abgegebenen Drehmoment proportional ist, repräsentiert diese Ist-Größe das jeweilige Drehmoment des Elektromotors. In der Ansteuerschaltung wird diese Ist-Größe für das Drehmoment mit der eingestellten Soll-Größe für das Grenzdrehmoment verglichen. Bei Erreichen der Soll-Größe durch die Ist-Größe sperrt dann die Ansteuerschaltung den Leistungshalbleiter, so daß der Elektromotor abgeschaltet wird.

Es hat sich nun herausgestellt, daß mittels des beschriebenen Schraubbetriebs an Elektrowerkzeugen mit einer derartigen Schaltungsanordnung die Schrauben selten bündig in das Material eingedreht werden können. Durch Inhomogenitäten im Material, beispielsweise wenn Astlöcher im Holz vorhanden sind usw., schwanken die benötigten Drehmomente für das bündige Eindrehen, so daß in der Praxis entweder die Schrauben nicht vollständig oder zu tief in das Material eingedreht sind. Dies führt dazu, daß der Benutzer einen Betrieb mit Drehmomentabschaltung gar nicht einsetzt, wobei dann aber genausowenig eine positionsrichtige Einschraubtiefe erreichbar ist.

Ausgehend von dieser Praxis, liegt der Erfindung die Aufgabe zugrunde, ein Verfahren zum Betrieb eines Elektromotors mit Drehmomentabschaltung anzugeben, bei dem ein positionsrichtiges Bearbeitungsergebnis gewährleistet ist. Weiter soll eine Schaltungsanordnung für einen Elektromotor zur Realisierung dieses Verfahrens angegeben werden.

Diese Aufgabe wird durch das Verfahren gemäß Anspruch 1 und durch eine Schaltungsanordnung gemäß Anspruch 6 gelöst.

Weitere Ausgestaltungen der Erfindung sind Gegenstand der Unteransprüche.

So kann das Nachdrehmoment und die Drehmomentpause eine bestimmte, gegebenenfalls variabel einstellbare Länge besitzen. Das Nachdrehmoment hat wenigstens die Größe des Grenzdrehmoments.

Die weitere Betriebsphase besteht gemäß einer weiteren Ausbildung aus einander abwechselnd wiederholenden zweiten und dritten Phasenabschnitten, wobei im zweiten Phasenabschnitt der Elektromotor mit einer zweiten Drehzahl, die geringer als die erste Drehzahl ist, während einer zweiten Zeitspanne betrieben wird und im dritten Phasenabschnitt der Elektromotor mit einer dritten Drehzahl, die größer als die zweite Drehzahl ist, während einer dritten Zeitspanne betrieben wird. Bevorzugterweise ist dabei die zweite Drehzahl gleich Null und die dritte Drehzahl gleich oder größer als die erste Drehzahl. Die zweite und/oder dritte Zeitspanne können variabel durch den Benutzer voreinstellbar sein. Der Elektromotor kann in der weiteren Betriebsphase das Nachdrehmoment mit einem Sanftanlauf ausüben, indem vorzugsweise nach Beendigung des zweiten Phasenabschnitts die Drehzahl kontinuierlich von der zweiten Drehzahl auf die dritte Drehzahl gesteigert wird. Diese Drehzahlsteigerung kann mit einem durch den Benutzer vorgebbaren Verlauf erfolgen.

Die zur Realisierung des erfindungsgemäßen Verfahrens dienende Schaltungsanordnung kann Wechselspannung oder Gleichspannung als Betriebsspannung verwenden. Bei Wechselspannung wird als elektronischer Schalter ein Triac, Diac o. dgl. und bei Gleichspannung ein Transistor, wie Bipolartransistor, MOS-FET o. dgl. verwendet. Die Ansteuerungsschaltung für den Betrieb des Elektromotors in der Betriebsphase mit einer ersten Drehzahl ist bevorzugterweise als integrierte Schaltung ausgebildet. Die Einrichtung zum periodischen Wiedereinschalten des elektronischen Schalters in der erfindungsgemäßen weiteren Betriebsphase kann durch einen zusätzlichen Entladezweig für den Kondensator in der Einrichtung zur Voreinstellung der Soll-Größe für das Grenzdrehmoment realisiert sein. Dieser Entladezweig ist vorzugsweise über eine Diode, einen Transistor o. dgl. auf einen Ein/Ausgang an der integrierten Schaltung zurückgeführt. Gegebenenfalls kann zwischen dem Ein/Ausgang an der integrierten Schaltung und dem Kondensator eine mit einem Operationsverstärker in Reihe zur Diode ausgestattete Zusatzschaltung angeordnet sein.

Entsprechend einer weiteren Ausbildung der Erfindung läßt sich eine Verbesserung der Regelung im Sinne eine Konstanz der Drehzahl unter Belastung des Elektromotors erzielen. Hierzu wird in der Schaltungsanordnung zwischen der Einrichtung zur Voreinstellung der Drehzahl und dem zugehörigen Ein/Ausgang für die Zuführung der Steuerspannung an der Ansteuerschaltung ein mit der Steuerspannung veränderlicher Widerstand angeordnet. Aufgrund des veränderlichen Widerstands ist die Regeleigenschaft dann von der Belastung des Elektromotors abhängig, so daß die Drehzahl des Elektromotors auch unter Belastung weitgehend konstant entsprechend der Soll-Drehzahl bleibt.

Bei dem veränderlichen Widerstand kann es sich um ein elektronisches Bauelement mit elektrischer Ventilwirkung, wie eine Diode, einen Transistor o. dgl., handeln. Das elektronische Bauelement mit elektrischer Ventilwirkung kann in einem Netzwerk aus Festwiderständen befindlich sein. Das Netzwerk kann wiederum aus einem von zwei Festwiderständen gebildeten Spannungsteiler bestehen, wobei das elektronische Bauelement mit elektrischer Ventilwirkung am Verbindungspunkt zwischen den beiden Festwiderständen angeschaltet ist. Der Potentiometerabgriff des in der Einrichtung zur Voreinstellung befindlichen Potentiometers steht bevorzugterweise mit dem elektronischen Bauelement mit elektrischer Ventilwirkung in elektrischer Verbindung.

Die mit der Erfindung erzielten Vorteile bestehen insbesondere darin, daß ein feinfühliges Arbeiten des Elektromotors auch bei hohen Drehzahlen ermöglicht ist, da der Elektromotor vom Benutzer auf einfache Weise positionsrichtig abgeschaltet werden kann. Wird beispielsweise ein Elektroschrauber nach dem erfindungsgemäßen Verfahren betrieben, so wird die Schraube in das aufnehmende Material eingedreht bis das voreingestellte Grenzdrehmoment erreicht ist. Danach wird in die weitere Betriebsphase umgeschaltet, wobei jeweils ein kurzzeitiges Nachdrehmoment auf die Schraube ausgeübt wird, so daß die Schraube abschnittsweise weitergedreht wird. Der Benutzer kann dann den Elektroschrauber zwischen zwei derartigen Abschnitten, wo jeweils eine kurze Bewegungspause auftritt, mühelos abschalten, wenn der Schraubenkopf bündig in der Materialoberfläche ist. Man erzielt folglich ein schnelleres und gefühlvolleres Eindrehen der Schraube und ein verbessertes Arbeitsergebnis. Durch die Verwendung des erfindungsgemäßen Verfahrens sinkt somit der Ausschuß bei der Bearbeitung von Werkstücken mit Hilfe von Elektrowerkzeugen. Gleichzeitig wird eine Kosteneinsparung bei der externen Beschaltung an der integrierten Schaltung erzielt, da ein Operationsverstärker und externe elektronische Bauteile, die bei der herkömmlichen Beschaltung notwendig sind, durch ein einziges elektronisches Bauteil mit elektrischer Ventilwirkung ersetzt werden können.

Ausführungsbeispiele der Erfindung sind in den Zeichnungen dargestellt und werden im folgenden näher beschrieben. Es zeigen
- Fig. 1: eine Schaltungsanordnung für die Ansteuerung eines Elektromotors,
- Fig. 2: den Motorstrom bei einer Schaltungsanordnung nach Fig. 1,
- Fig. 3: eine Schaltungsanordnung wie in Fig. 1 in einer weiteren Ausführungsform,
- Fig. 4: eine Schaltungsanordnung wie in Fig. 1 in nochmals einer weiteren Ausführungsform und
- Fig. 5: ein schematisches Diagramm zum Drehzahlverlauf eines Elektromotors unter Belastung.

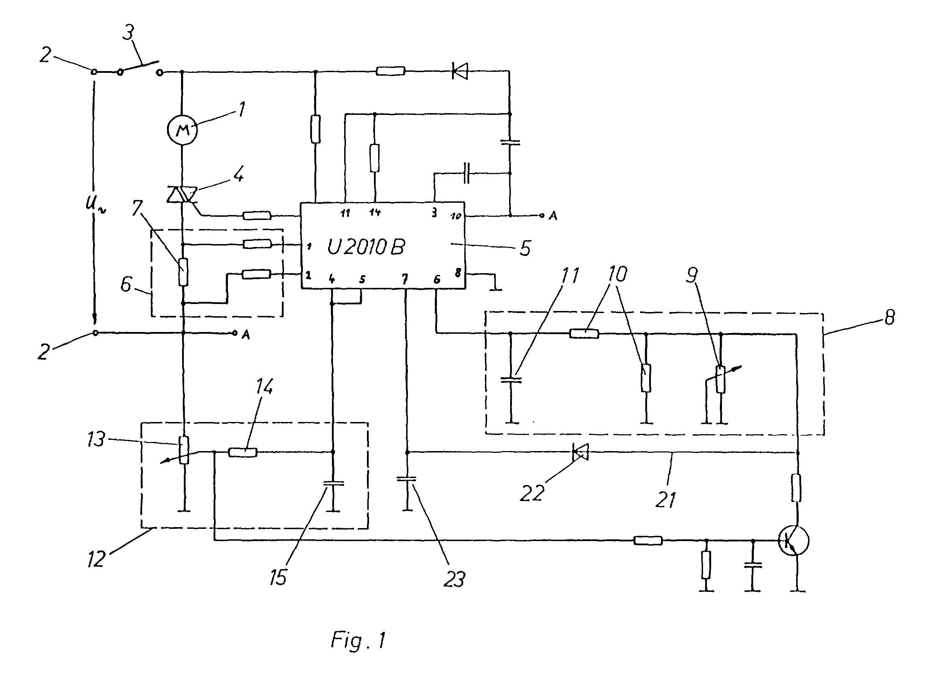

Eine erste Ausführungsform für eine Schaltungsanordnung zum Betrieb eines Elektromotors 1 mit einstellbarer Drehzahl nach dem erfindungsgemäßen Verfahren ist in Fig. 1 zu sehen. Es handelt sich bei dem Elektromotor 1 um einen mit Wechselspannung als Betriebsspannung gespeisten Universalmotor, wie er insbesondere in handgeführten Elektrowerkzeugen, beispielsweise Bohrmaschinen, Schraubmaschinen o. dgl. eingesetzt wird.

Der Elektromotor 1 ist an die Anschlüsse 2 für die Betriebsspannung über einen elektrischen Schalter 3, der zum manuellen Aus- und Einschalten der Betriebsspannung dient, angeschaltet. Zum Betrieb des Elektromotors 1 mit einer bestimmten Drehzahl ist im Motorkreis ein elektronischer Schalter 4 angeordnet, der vorliegend aus einem Leistungshalbleiter, beispielsweise einem Triac, besteht. Der elektronische Schalter 4 wird wiederum von einer Steuerelektronik, die aus einer integrierten Schaltung 5 besteht, angesteuert. Als integrierte Schaltung ist beispielsweise der Typ U 2010 B der Fa. Telefunken geeignet.

Die integrierte Schaltung 5 arbeitet zur Drehzahleinstellung mit einer Phasenanschnitt-Steuerung, so daß der elektronische Schalter 4 Pulse in Form von angeschnittenen Sinushalbwellen der Betriebsspannung an den Elektromotor 1 anlegt. Soll der Elektromotor 1 mit der größten Drehzahl betrieben werden, so bleibt der elektronische Schalter 4 dauernd eingeschaltet oder wird überbrückt, so daß vollständige Sinushalbwellen an den Elektromotor 1 angelegt werden. Somit ist der Elektromotor 1 während der Betriebsphase mit einer ersten Drehzahl betreibbar.

Zur Voreinstellung der Drehzahl für den Elektromotor 1 durch den Benutzer besitzt die Schaltungsanordnung eine Einrichtung 12. Diese Einrichtung 12 ist als Netzwerk aus einem Potentiometer 13, einem Widerstand 14 und einem Kondensator 15 ausgebildet, wobei dieses Netzwerk über die Ein/Ausgänge 4, 5 an die integrierte Schaltung 5 angeschlossen ist. Der Benutzer stellt die gewünschte Drehzahl des Elektromotors am Potentiometer 13 ein.

Die Schaltungsanordnung ist weiter mit einer Einrichtung 6 zur Messung einer das Drehmoment des Elektromotors 1 repräsentierenden Ist-Größe ausgestattet. In dieser Einrichtung 6 befindet sich ein Widerstand 7, der sogenannte Shunt, der im Stromkreis für den Motorstrom befindlich ist. Dadurch entsteht am Widerstand 7 ein dem Motorstrom proportionaler Spannungsabfall, der wiederum über die Ein/Ausgänge 1, 2 der integrierten Schaltung 5 zugeführt wird. Da der Motorstrom dem vom Elektromotor 1 abgegebenen Drehmoment proportional ist, stellt dieser Spannungsabfall folglich die das Drehmoment des Elektromotors 1 repräsentierende Ist-Größe dar.

Noch weiter befindet sich in der Schaltungsanordnung eine Einrichtung 8 zur Voreinstellung einer das Grenzdrehmoment repräsentierenden Soll-Größe. Diese Einrichtung 8 ist als Netzwerk aus einem Potentiometer 9, Widerständen 10 und einem Kondensator 11 ausgebildet. Das Netzwerk ist an den Ein/Ausgängen 6, 7 der integrierten Schaltung 5 angeschlossen. Der Benutzer stellt das gewünschte Grenzdrehmoment am Potentiometer 9 ein.

Die sonstige Beschaltung der integrierten Schaltung 5 ist für den vorliegenden Zweck weniger wichtig und braucht deshalb hier nicht weiter erläutert zu werden.

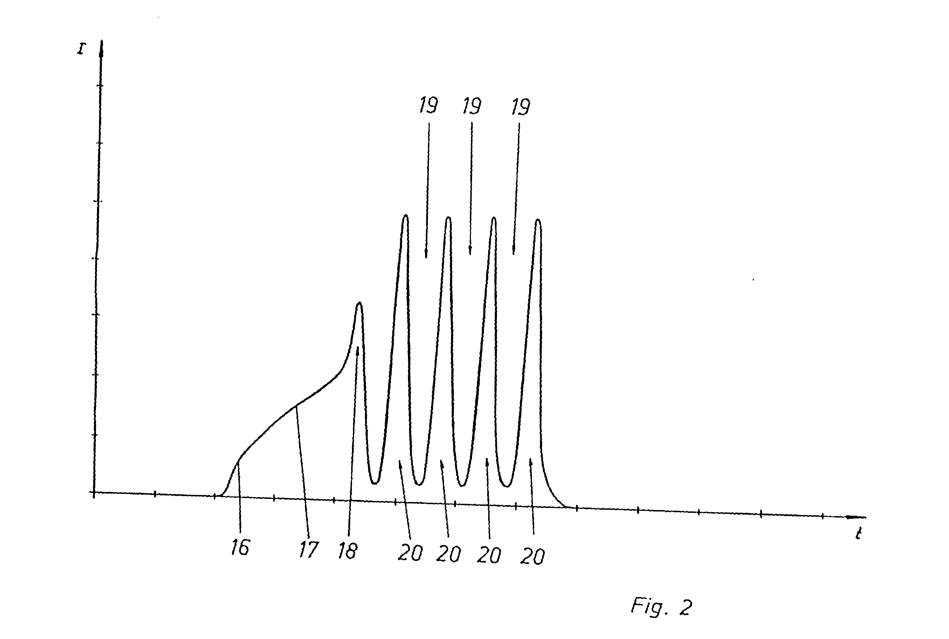

Ist die gewünschte erste Drehzahl am Potentiometer 13 der Einrichtung 12 eingestellt und wird die Schaltungsanordnung am elektrischen Schalter 3 eingeschaltet, so geht der Elektromotor 1 in die Betriebsphase über. Diese ist anhand des mit Hilfe des Widerstands 7 gemessenen Stroms I in Abhängigkeit von der Zeit t in einem Diagramm in Fig. 2 näher dargestellt. Zunächst wird der elektronische Schalter 4 von der integrierten Schaltung 5 derart angesteuert, daß die Drehzahl in einem sogenannten Sanftanlauf 16 kontinuierlich von Null auf die gewünschte voreingestellte, erste Drehzahl hochgefahren wird. Mit dieser ersten Drehzahl in der Betriebsphase 17 wird das Werkstück bearbeitet, also beispielsweise die Schraube solange eingedreht, bis der Schraubenkopf in die Nähe der Materialoberfläche kommt. Dann steigt das Drehmoment und damit der gemessene Strom I sehr stark an, so daß das Ende 18 der Betriebsphase erreicht ist.

Sobald das am Potentiometer 9 der Einrichtung 8 voreingestellte Grenzdrehmoment entsprechend der Soll-Größe durch die Ist-Größe erreicht ist, wird herkömmlicherweise der Elektromotor 1 durch die integrierte Schaltung 5 abgeschaltet. Beim erfindungsgemäßen Verfahren zum Betrieb des Elektromotors 1 wird jedoch bei Erreichen des Grenzdrehmoments der Elektromotor 1 in eine weitere Betriebsphase umgeschaltet. In dieser weiteren Betriebsphase wird der Elektromotor 1 von der integrierten Schaltung 5 derart angesteuert, daß ein durch Drehmomentpausen 19 einer bestimmten Länge periodisch unterbrochenes Nachdrehmoment 20 vom Elektromotor 1 ausgeübt wird. Das Nachdrehmoment besitzt vorzugsweise die Größe des Grenzdrehmoments oder kann gegebenenfalls auch größer sein. Diese weitere Betriebsphase dauert so lange an, bis der Elektromotor 1 manuell am elektrischen Schalter 3 ausgeschaltet wird, was der Benutzer mühelos positionsgenau vornehmen kann, da jeweils kurze Bewegungspausen entsprechend der Drehmomentpausen 19 am Elektromotor 1 auftreten.

Vorzugsweise besteht die weitere Betriebsphase aus einander abwechselnd wiederholenden zweiten und dritten Phasenabschnitten. Im zweiten Phasenabschnitt 19 wird der Elektromotor 1 mit einer zweiten Drehzahl, die geringer als die erste Drehzahl ist, während einer zweiten Zeitspanne betrieben. Dadurch bewegt sich der Rotor des Elektromotors 1 langsamer oder bleibt stehen, falls das ausgeübte Drehmoment zur Bewegung nicht ausreicht. Falls gewünscht, kann die zweite Drehzahl auch Null sein. Im dritten Phasenabschnitt 20 wird der Elektromotor 1 mit einer dritten Drehzahl, die größer als die zweite Drehzahl ist, während einer dritten Zeitspanne betrieben, so daß der Rotor des Elektromotors 1 sich dort wieder bewegt. Die dritte Drehzahl kann gleich oder auch größer als die erste Drehzahl gewählt werden. Schließlich ist es auch möglich, daß die zweite und/oder dritte Zeitspanne variabel durch den Benutzer voreinstellbar ist, beipielsweise mittels einer weiteren, ein Potentiometer enthaltenden Einstellvorrichtung. In diesem Fall kann der Benutzer die weitere Betriebsphase optimal auf die Bedürfnisse des jeweiligen zu bearbeitenden Materials einstellen.

Wie bereits ausgeführt, wird der Elektromotor 1 zu Beginn der Betriebsphase mittels eines Sanftanlaufs 16 durch die integrierte Schaltung 5 angesteuert. Auch in der weiteren Betriebsphase kann das Nachdrehmoment mit einem Sanftanlauf ausgeübt werden. Dazu wird jeweils nach Beendigung des zweiten Phasenabschnitts und zu Beginn des dritten Phasenabschnitts die Drehzahl kontinuierlich von der zweiten Drehzahl auf die dritte Drehzahl gesteigert. Falls gewünscht kann auch dieser Sanftanlauf einstellbar ausgestaltet sein, so daß dieser durch den Benutzer seinen Bedürfnissen entsprechend anpaßbar ist.

Zur Realisierung des beschriebenen Verfahrens ist in der Schaltungsanordnung eine Einrichtung 21 zum periodischen Wiedereinschalten des elektronischen Schalters 4 mit dazwischenliegenden Drehmoment-Pausen 19 angeordnet, wie in Fig. 1 näher zu sehen ist. Diese Einrichtung 21 ist nach Beendigung der Betriebsphase durch Erreichen des Grenzdrehmomentes in der weiteren Betriebsphase des Elektromotors 1 bis zum manuellen Abschalten des elektrischen Schalters 3 aktiv. Die Einrichtung 21 wird durch einen zusätzlichen Entladezweig für den Kondensator 11 in der Einrichtung 8 zur Voreinstellung der Soll-Größe für das Grenzdrehmoment realisiert, wobei der Entladezweig über ein elektronisches Bauteil mit elektrischer Ventilwirkung auf den Ein/Ausgang 7 an der integrierten Schaltung 5 zurückgeführt ist. Das elektronische Bauteil mit elektrischer Ventilwirkung kann aus einer Diode 22, einem Transistor o. dgl. bestehen.

Im folgenden soll nun die Wirkungsweise der Schaltungsanordnung zum Betrieb des Elektromotors 1 nach dem beschriebenen Verfahren bei Verwendung der integrierten Schaltung vom Typ U 2010 B, im weiteren abkürzend IC 5 genannt, unter Bezug auf Fig. 1 noch näher erläutert werden.

Beim Einschalten der Netzspannung durch den Schalter 3 wird am Ein/Ausgang 7 ein Ladestrom zur Aufladung des Ein/Ausgangs 7 auf eine Referenzspannung geliefert, wodurch der Sanftanlauf bewirkt wird. Der Sanftanlauf kann durch einen zusätzlichen Kondensator 23 am Ein/Ausgang 7 mit entsprechender Dimensionierung noch gedämpft werden.

Die dem Ein/Ausgang 4 von der Einrichtung 12 zugeführte Steuerspannung, die die einzustellende erste Drehzahl repräsentiert, wird während der Betriebsphase mit einer netzsynchronisierten Rampenspannung am Ein/Ausgang 3 verglichen. Erreicht die Rampenspannung am Ein/Ausgang 3 den Wert der Steuerspannung am Ein/Ausgang 4, so wird ein Zündimpuls vom IC 5 an den elektronischen Schalter 4 weitergegeben, so daß ein bestimmter Stromflußwinkel für Ò den Phasenanschnitt am elektronischen Schalter 4 zum Betrieb des Elektromotors 1 mit der ersten Drehzahl vorliegt. Der als Spannungsabfall am Widerstand 7 erfaßte und den Ein/Ausgängen 1, 2 zugeführte Motorstrom bewirkt über Ein/Ausgang 5 des IC's 5 bei einer Belastung des Elektromotors 1 einen Anstieg der Steuerspannung am Ein/Ausgang 4. Dadurch wird eine Regelung der ersten Drehzahl in der Betriebsphase durch das IC 5 erzielt.

Am Ein/Ausgang 6 steht ein dem Motorstrom proportionaler Ausgangsstrom zur Verfügung. Dieser bewirkt über die Widerstände 10 und das Potentiometer 9 in der Einrichtung 8 einen Spannungsabfall, wobei diese Spannung mit dem Kondensator 11 zusätzlich geglättet wird. Erreicht diese Spannung am Ein/Ausgang 6 einen Schwellenwert von ca. 6,2 V, so ist das mit der Einrichtung 8 voreingestellte Grenzdrehmoment erreicht und der Ein/Ausgang 7 vom IC 5 wird intern kurzgeschlossen. Dadurch wird wiederum der Stromflußwinkel Ò zur Laststrombegrenzung am Elektromotor 1 auf seinen minimalen Wert eingestellt, womit sich der Elektromotor 1 am Ende 18 der Betriebsphase befindet.

Fällt anschließend die Spannung am Ein/Ausgang 6 unter einen Wert von ca. 1,5 V, d.h. ungefähr 25 % des Schwellenwertes von 6,2 V, so wird vom IC 5 ein erneuter Sanftanlauf ausgelöst, der wiederum bis zum Erreichen des Schwellenwertes von ca. 6,2 V am Ein/Ausgang 6 führt. Somit entsteht nach Ende 18 der Betriebsphase ein Schwingverhalten zwischen versuchtem Hochlaufen, was einen Stromanstieg an Ein/Ausgang 6 bis zum Überschreiten des Schwellenwertes von 6,2 V bewirkt, und einem darauffolgenden Entladen der Spannung am Ein/Ausgang 6 bis auf ca. 25 % des Schwellenwertes.

Die Erfindung bedient sich dieses Verhaltens des IC's 5, indem die jeweilige Entladezeit des Kondensators 11 durch die zusätzliche Diode 22, deren Kathode am Ein/Ausgang 7 angeschlossen ist, eingestellt wird, so daß ein angepaßter Zeitverlauf für das beschriebene Schwingverhalten resultiert. Die Diode 22 bewirkt als Einrichtung 21 folglich ein periodisches Wiedereinschalten des elektronischen Schalters 4 entsprechend einer weiteren Betriebsphase mit Nachdrehmomenten 20 und dazwischenliegenden Drehmomentpausen 19, wobei die Drehmomentpausen 19 ca. 0,8 bis 1 sec betragen. Bei Bedarf kann diese Zeit verändert werden, indem beispielsweise die Anode der Diode 22 nicht am Potentiometer 9 sondern über einen weiteren Widerstand direkt am Ein/Ausgang 6 des IC's 5 angeschlossen und die Größe des weiteren Widerstands entsprechend dimensioniert wird.

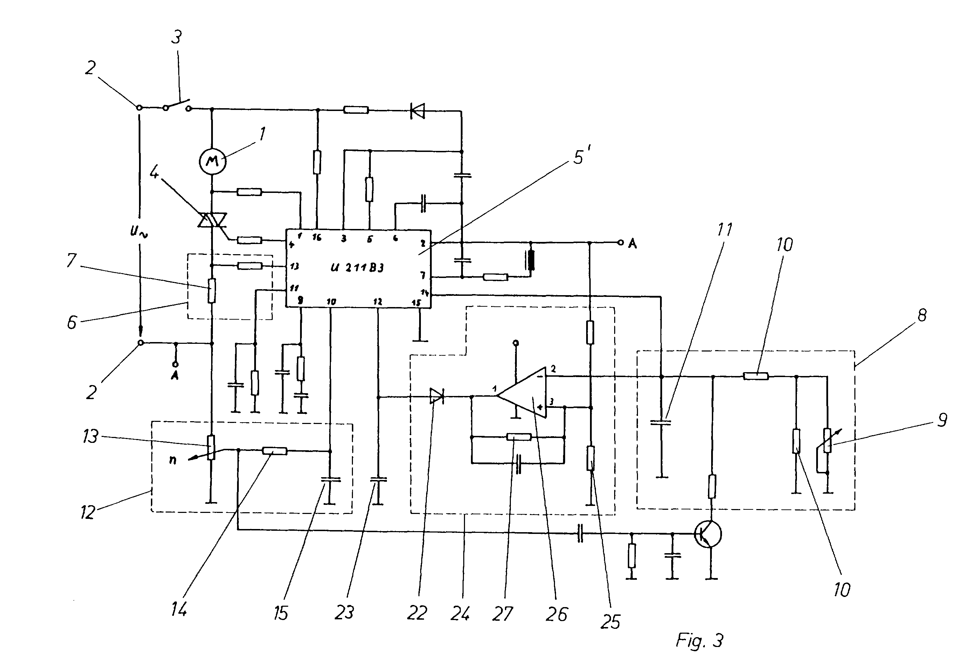

Bei einem weiteren Ausführungsbeispiel, das näher in Fig. 3 gezeigt ist, wird eine integrierte Schaltung vom Typ U 211 B3, im weiteren abkürzend IC 5' genannt, verwendet.

Der Sanftanlauf wird bei IC 5' durch den am Ein/Ausgang 12 gelieferten Ladestrom für den Kondensator 23 bewirkt. Der Stromflußwinkel Ò wird durch Vergleich der Rampenspannung am Ein/Ausgang 6 mit einer Steuerspannung am Ein/Ausgang 11 eingestellt, wobei die Steuerspannung am Ein/Ausgang 11 sich aus der von der Belastung des Elektromotors 1 abhängigen Differenz zwischen dem Soll- und Istwert für die Drehzahl ergibt. Ein dem Motorstrom am Ein/Ausgang 13 entsprechender Ausgangsstrom steht am Ein/Ausgang 14 zur Verfügung. Dieser Ausgangsstrom wird im Kondensator 11 integriert. Überschreitet die zum Motorstrom proportionale Spannung am Kondensator 11 einen im IC 5' intern eingestellten Schwellenwert von ca. 7,3 V, so wird ein Speicher im IC 5' gesetzt und die Regelung für das Grenzdrehmoment eingeschaltet.

Die weitere Betriebsphase mit Nachdrehmomenten 20 wird durch die Zusatzschaltung 24 gesteuert. In der Zusatzschaltung 24 wird die am Kondensator 11 anliegende Spannung mit einer am Widerstand 25 anliegenden Schwellenspannung verglichen. Beim Überschreiten dieser Schwellenspannung schaltet der Ausgang 1 eines Operationsverstärkers 26 in der Zusatzschaltung 24 auf Masse und dabei wird über die Diode 22 der Ein/Ausgang 12 am IC 5' für die Sanftanlaufspannung ebenfalls auf Masse gelegt. Gleichzeitig wird durch die Rückführung der Spannung vom Ausgang 1 des Operationsverstärkers 26 über die Parallelschaltung der Widerstände 25 und 27 auf den Eingang 3 des Operationsverstärkers 26 die dort anliegende Schwellenspannung reduziert, so daß ein sicheres Schaltverhalten des Operationsverstärkers 26 bewirkt wird. Der auf Masse liegende Ein/Ausgang 12 des IC's 5' bewirkt, daß der minimale Stromflußwinkel Ò vom IC 5' eingestellt wird, womit eine Drehmomentpause 19 am Elektromotor 1 auftritt. Dadurch reduziert sich wiederum der Ladestrom des Kondensators 11, wodurch die Schwellenspannung am Widerstand 25 schnell unterschritten wird. Dies bewirkt nun seinerseits ein Schalten des Ausgangs 1 des Operationsverstärkers 26 auf Spannung, wodurch ein erneuter Sanftanlauf am Ein/Ausgang 12 des IC's 5' und damit ein Nachdrehmoment 20 ausgelöst wird. Folglich entsteht in der weiteren Betriebsphase ein Schwingverhalten, welches Nachdrehmomente 20 mit dazwischenliegenden Drehmomentpausen 19 am Elektromotor 1 bewirkt. Die Zeiteinstellung des Schwingverhaltens sowie die Einstellung der Größe der Nachdrehmomente 20 erfolgt durch entsprechende Dimensionierung der Bauteile in der Zusatzschaltung 24.

Bei der in Fig. 1 gezeigten, mit einer integrierter Schaltung vom Typ U 2010 B arbeitenden Schaltungsanordnung kann es unter Umständen vorkommen, daß die Drehzahl bei Belastung des Elektromotors 1 absinkt. Diese Schaltungsanordnung kann in einer Weiterbildung der Erfindung in Bezug auf die Konstanz der Drehzahl bei Drehmomentänderungen noch verbessert werden. Diese Verbesserung erfolgt im wesentlichen durch Anordnung eines Widerstands zwischen der integrierten Schaltung 5 und der Einrichtung 12 zur Voreinstellung der Drehzahl, wobei die Größe des Widerstands sich in Abhängigkeit von dem durch den Elektromotor 1 fließenden Motorstrom ändert.

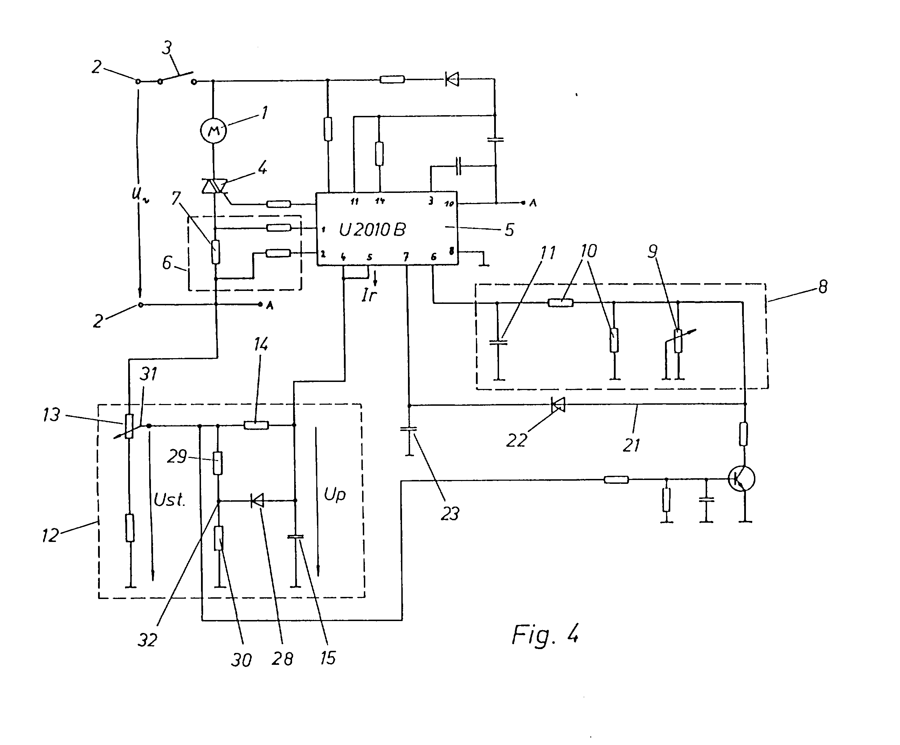

Eine derartige Schaltungsanordnung gemäß der weiteren Ausbildung der Erfindung ist näher in Fig. 4 zu sehen. Die Schaltungsanordnung zum Betrieb des Elektromotors 1 besitzt wiederum einen elektronischen Schalter 4 zum Anlegen der Betriebsspannung und/oder von Pulsen der Betriebsspannung an den Elektromotor 1. Weiter befinden sich eine als integrierte Schaltung 5 vom Typ U 2010 B ausgebildete Ansteuerschaltung für den elektronischen Schalter 4, eine Einrichtung 12 zur Voreinstellung einer Drehzahl, eine Einrichtung 6 zur Messung einer das Drehmoment des Elektromotors 1 repräsentierenden Ist-Größe und gegebenenfalls eine Einrichtung 8 zur Voreinstellung eines Grenzdrehmomentes in der Schaltungsanordnung.

Die von der Einrichtung 6 gemessene, das Drehmoment repräsentierende Ist-Größe wird einem Ein/Ausgang 1, 2 der integrierten Schaltung 5 zugeführt. Die integrierte Schaltung 5 ermittelt aus dieser Ist-Größe einen in funktioneller Abhängigkeit von der Ist-Größe stehenden resultierenden Strom Ir und stellt diesen Strom Ir an einem Ein/Ausgang 5 der integrierten Schaltung 5 zur Verfügung. In der Einrichtung 12 zur Voreinstellung der Drehzahl wird eine in funktioneller Abhängigkeit von der einzustellenden Drehzahl stehende Sollwertspannung Ust erzeugt. Aus der Sollwertspannung Ust und dem resultierenden Strom Ir wird eine Steuerspannung Up gebildet, die am Ein/Ausgang 4 der integrierten Schaltung 5 eingespeist wird. Aufgrund dieser Steuerspannung Up wird der Elektromotor 1 während der Betriebsphase mit der eingestellten Drehzahl betrieben sowie die Drehzahl bei Änderungen der Belastung des Elektromotors 1 geregelt, wie bereits weiter oben beschrieben ist.

Wie gefunden wurde, läßt sich nun eine Verbesserung der Regelung im Sinne einer Konstanz der Drehzahl unter Belastung des Elektromotors 1 dadurch erzielen, daß zwischen der Einrichtung 12 zur Voreinstellung der Drehzahl mit der Sollwertspannung Ust und dem Ein/Ausgang 4 der integrierten Schaltung 5 zur Zuführung der Steuerspannung Up ein mit der Steuerspannung Up veränderlicher Widerstand 28 angeordnet ist. Der veränderliche Widerstand 28 besteht bevorzugterweise aus einem elektronischen Bauelement mit elektrischer Ventilwirkung, wie einer Diode, einem Transistor o. dgl., wobei der Potentiometerabgriff 31 des zur Erzeugung der Sollwertspannung Ust dienenden Potentiometers 13 mit dem veränderlichen Widerstand 28 in Verbindung steht. Der veränderliche Widerstand 28 kann in einem Netzwerk aus Festwiderständen 29, 30 befindlich sein. Bei dem Netzwerk handelt es sich um einen aus zwei Festwiderständen 29, 30 gebildeten Spannungsteiler, wobei der veränderliche Widerstand 28 mit seiner Kathode am Verbindungspunkt zwischen den beiden Festwiderständen 29, 30 des Spannungsteilers angeschaltet ist.

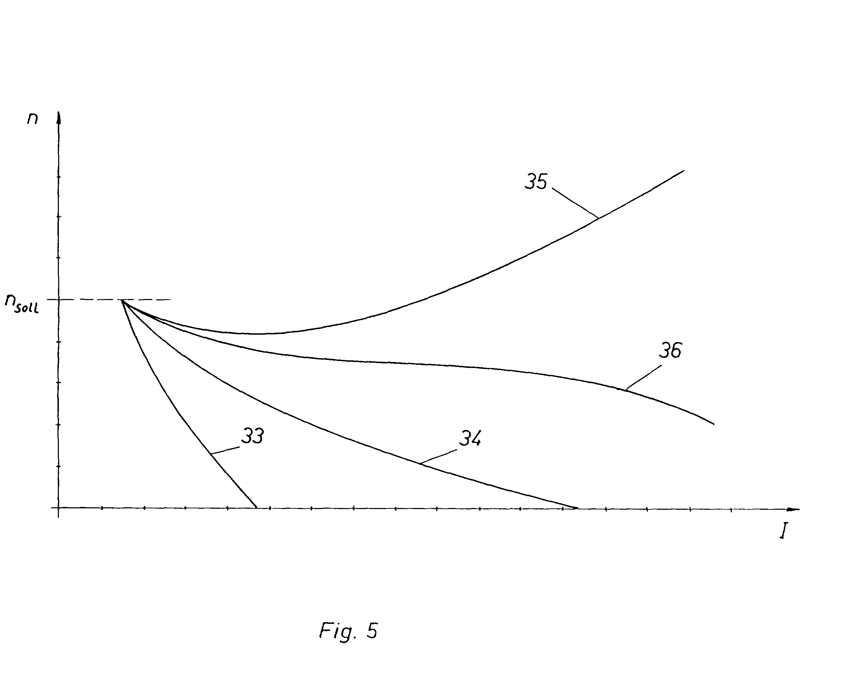

Die Wirkung des veränderlichen Widerstandes 28 auf die integrierte Schaltung 5 zur Ansteuerung des Elektromotors 1 läßt sich aus dem schematischen Diagramm nach Fig. 5 entnehmen. Dort ist auf der Ordinate die Drehzahl n des Elektromotors 1 aufgetragen, wobei die mittels der Einrichtung 12 eingestellte Soll-Drehzahl als nsoll bezeichnet ist. Auf der Abszisse ist der Motorstrom I eingetragen, der wiederum proportional des vom Elektromotor 1 ausgeübten Drehmomentes ist, so daß ansteigende Motorstrom-Werte I im Diagramm eine ansteigende Belastung des Elektromotors 1 wiederspiegeln.

Die Soll-Drehzahl nsoll wird am Elektromotor 1 gemessen, wenn keine Belastung vorhanden ist. Zum Vergleich mit der Regelung gemäß Fig. 1 und 4 ist mit der Kennlinie 33 ein Motorbetrieb ohne Regelung angegeben. Wie man sieht, sinkt die Drehzahl n bei Anstieg der Belastung ausgehend von nsoll sehr schnell ab. Mit der Kennlinie 34 ist eine Regelung entsprechend der Schaltungsanordnung in Fig. 1 gezeigt. Die Regeleigenschaft wird dort durch den Widerstand 14, der eine feste Größe besitzt, bestimmt. Wie man erkennt, sinkt die Drehzahl bei steigender Belastung zwar langsamer als bei der Kennlinie 33, jedoch ist die Kennlinie nach wie vor von einer Konstanz im Hinblick auf die Soll-Drehzahl nsoll entfernt. Wird die Regeleigenschaft durch Erhöhung der Größe des Widerstands 14 verändert, so erhält man die Kennlinie 35, bei der die Drehzahl bei steigender Belastung unerwünscht hochläuft. Die Kennlinie 36 schließlich zeigt eine Regelung entsprechend der Fig. 4. Aufgrund des veränderlichen Widerstands 28 ist die Regeleigenschaft von der Belastung des Elektromotors 1 abhängig, während im Gegensatz zu bisherigen Regelungen die Regeleigenschaft fest eingestellt ist. Die mit der Regeleigenschaft einhergehende Regelverstärkung verkleinert sich daher mit zunehmender Belastung des Elektromotors 1 und verhindert so ein unerwünschtes Hochlaufen der Drehzahl. Wie man anhand der Kennlinie 36 sieht, bleibt die Drehzahl auch unter Belastung weitgehend konstant entsprechend der Soll-Drehzahl nsoll. Insbesondere in den unteren Drehzahlbereichen erzielt man damit eine wirksame Verbesserung der Drehzahl-Regelung.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann die Erfindung auch bei Elektromotoren verwendet werden, die mittels Gleichspannung betrieben werden. In diesem Fall ist der Leistungshalbleiter für den elektronischen Schalter als Transistor, wie Bipolartransistor, MOS-FET o. dgl., ausgebildet. Bevorzugterweise kann die erfindungsgemäße Schaltungsanordnung auch im Gehäuse eines Elektrowerkzeugschalters, der eine Drehzahleinstellung des Elektrowerkzeugs mittels eines manuell bewegbaren Drückers gestattet, angeordnet sein. Im übrigen läßt sich das erfindungsgemäße Verfahren auch im Linkslauf des Elektromotors anwenden, beispielsweise um festsitzende Schrauben zu lösen.

### Bezugszeichenliste:

- 1.: Elektromotor
- 2.: Anschluß (für Betriebsspannung)
- 3.: elektrischer Schaltter
- 4.: elektronischer Schalter (Leistungshalbleiter)
- 5,5'.: integrierte Schaltung (für Steuerelektronik)
- 6.: Einrichtung (für Messung Drehmoment)
- 7.: Widerstand
- 8.: Einrichtung (für Voreinstellung Grenzdrehmoment)
- 9.: Potentiometer
- 10.: Widerstand
- 11.: Kondensator
- 12.: Einrichtung (für Voreinstellung der Drehzahl)
- 13.: Potentiometer
- 14.: Widerstand
- 15.: Kondensator
- 16.: Sanftanlauf
- 17.: Betriebsphase
- 18.: Ende der Betriebsphase
- 19.: Drehmomentpause
- 20.: Nachdrehmoment
- 21.: Einrichtung (zum Wiedereinschalten des elektronischen Schalters)
- 22.: Diode
- 23.: Kondensator (für Sanftanlauf)
- 24.: Zusatzschaltung (weitere Ausführung)
- 25.: Widerstand
- 26.: Operationsverstärker
- 27.: Widerstand
- 28.: veränderlicher Widerstand
- 29,30.: Festwiderstand
- 31.: Potentiometerabgriff
- 32.: Verbindungspunkt (von Spannungsteiler)
- 33.: Kennlinie (ohne Regelung)
- 34.: Kennlinie (mit fester Regeleigenschaft)
- 35.: Kennlinie (mit fester, vergrößerter Regeleigenschaft)
- 36.: Kennlinie (mit veränderlichem Widerstand)

## Patentansprüche

1. Verfahren zum Betrieb eines Elektromotors (1), insbesondere zur Verwendung in einem Elektrohandwerkzeug, wie Elektroschrauber, Akku-Bohrmaschine o. dgl., wobei der manuell ein- und ausschaltbare Elektromotor (1) während der Betriebsphase (17) mit einer ersten, gegebenenfalls variabel voreinstellbaren Drehzahl bis zum Erreichen eines voreingestellten Grenzdrehmoments betrieben wird,
wobei bei Erreichen des Grenzdrehmoments der Elektromotor (1) in eine weitere Betriebsphase umgeschaltet wird, die so lange andauert, bis der Elektromotor (1) ausgeschaltet wird,
wobei die weitere Betriebsphase aus einander sich abwechselnd wiederholenden zweiten und dritten Phasenabschnitten besteht, und wobei der Elektromotor im zweiten Phasenabschnitt mit einer zweiten Drehzahl für eine Drehmomentpause (19) sowie im dritten Phasenabschnitt mit einer dritten Drehzahl für ein Nachdrehmoment (20) betrieben wird,
derart, daß in der weiteren Betriebsphase ein Nachdrehmoment (20), das durch Drehmomentpausen (19) periodisch unterbrochen wird, durch den Elektromotor (1) ausgeübt wird.

2. Verfahren nach Anspruch 1, dadurch gekennzeichnet, daß das Nachdrehmoment (20) wenigstens die Größe des Grenzdrehmoments besitzt, und daß vorzugsweise das Nachdrehmoment (20) und weiter vorzugsweise die Drehmomentpause (19) eine bestimmte, gegebenenfalls variabel einstellbare Länge besitzen.

3. Verfahren nach Anspruch 1 oder 2, dadurch gekennzeichnet, daß die zweite Drehzahl im zweiten Phasenabschnitt, mit der der Elektromotor (1) während einer zweiten Zeitspanne betrieben wird, geringer als die erste Drehzahl ist, und daß die dritte Drehzahl im dritten Phasenabschnitt, mit der der Elektromotor (1) während einer dritten Zeitspanne betrieben wird, größer als die zweite Drehzahl ist.

4. Verfahren nach Anspruch 3, dadurch gekennzeichnet, daß die zweite Drehzahl gleich Null ist, daß vorzugsweise die dritte Drehzahl gleich oder größer als die erste Drehzahl ist, und daß weiter vorzugsweise die zweite und/oder dritte Zeitspanne variabel durch den Benutzer voreinstellbar sind.

5. Verfahren nach einem der Ansprüche 1 bis 4, dadurch gekennzeichnet, daß der Elektromotor (1) in der weiteren Betriebsphase das Nachdrehmoment (20) mit einem Sanftanlauf ausübt, indem vorzugsweise nach Beendigung des zweiten Phasenabschnitts die Drehzahl kontinuierlich von der zweiten Drehzahl auf die dritte Drehzahl mit einem gegebenenfalls durch den Benutzer vorgebbaren Verlauf gesteigert wird.

6. Schaltungsanordnung zum Betrieb eines Elektromotors (1), insbesondere nach dem Verfahren eines der Ansprüche 1 bis 5, mit einem elektrischen Schalter (3) zum manuellen Aus- und Einschalten einer Betriebsspannung für den Elektromotor (1), mit einem elektronischen Schalter (4), wie einem Leistungshalbleiter, zum Anlegen der Betriebsspannung und/oder von Pulsen der Betriebsspannung an den Elektromotor (1), so daß der Elektromotor (1) während der Betriebsphase mit einer ersten, gegebenenfalls variabel einstellbaren Drehzahl betreibbar ist, mit einer Einrichtung (6) zur Messung einer das Drehmoment des Elektromotors (1) repräsentierenden Ist-Größe sowie mit einer Einrichtung (8) zur Voreinstellung einer das Grenzdrehmoment repräsentierenden Soll-Größe und Abschaltung des elektronischen Schalters (4) bei Erreichen des Grenzdrehmomentes entsprechend der Soll-Größe durch die Ist-Größe,
wobei eine Einrichtung (21) zum periodischen Wiedereinschalten des elektronischen Schalters (4) angeordnet ist, wobei die Einrichtung (21) nach Erreichen des Grenzdrehmomentes in einer weiteren Betriebsphase des Elektromotors (1) bis zum manuellen Abschalten des elektrischen Schalters (3) aktiv ist,
wobei die weitere Betriebsphase aus einander sich abwechselnd wiederholenden zweiten und dritten Phasenabschnitten besteht,
und wobei der elektronische Schalter (4) im zweiten Phasenabschnitt mit einer zweiten Drehzahl für eine Drehmomentpause (19) sowie im dritten Phasenabschnitt mit einer dritten Drehzahl für ein Nachdrehmoment (20) angesteuert wird, derart daß in der weiteren Betriebsphase Nachdrehmomente (20) mit dazwischenliegenden Drehmomentpausen (19) durch den Elektromotor (1) ausgeübt werden.

7. Schaltungsanordnung nach Anspruch 6, dadurch gekennzeichnet, daß der elektronische Schalter (4) als Triac, Diac o. dgl. ausgebildet ist, wobei Wechselspannung als Betriebsspannung für den Elektromotor (1) verwendet wird, oder daß der elektronische Schalter (4) als Transistor, wie Bipolartransistor, MOS-FET o. dgl., ausgebildet ist, wobei Gleichspannung als Betriebsspannung für den Elektromotor (1) verwendet wird, daß vorzugsweise eine gegebenenfalls als integrierte Schaltung (5, 5') ausgebildete Ansteuerungsschaltung für den elektronischen Schalter (4) zum Betrieb des Elektromotors (1) mit einer ersten Drehzahl und Abschaltung des elektronischen Schalters (4) bei Erreichen des Grenzdrehmoments angeordnet ist und daß weiter vorzugsweise die Einrichtung (8) zur Voreinstellung der Soll-Größe für das Grenzdrehmoment von einem Netzwerk aus einem Potentiometer (9), Widerständen (10) und einem Kondensator (11) gebildet ist, wobei das Netzwerk insbesondere an Ein/Ausgängen der integrierten Schaltung (5, 5') angeschlossen ist.

8. Schaltungsanordnung nach Anspruch 6 oder 7, dadurch gekennzeichnet, daß die Einrichtung (21) zum periodischen Wiedereinschalten des elektronischen Schalters (4) durch einen zusätzlichen Entladezweig für den Kondensator (11) in der Einrichtung (8) zur Voreinstellung der Soll-Größe für das Grenzdrehmoment besteht, wobei der Entladezweig vorzugsweise über ein elektronisches Bauteil mit elektrischer Ventilwirkung, wie eine Diode (22), einen Transistor o. dgl., auf einen Ein/Ausgang an der integrierten Schaltung (5, 5') zurückgeführt ist, und wobei gegebenenfalls zwischen dem Ein/Ausgang an der integrierten Schaltung (5') und dem Kondensator (11) eine mit einem Operationsverstärker (26), der an das elektronische Bauteil mit elektrischer Ventilwirkung angeschaltet ist, ausgestattete Zusatzschaltung (24) angeordnet sein kann.

9. Schaltungsanordnung zum Betrieb eines Elektromotors (1) mit einem elektronischen Schalter (4), wie einem Leistungshalbleiter, zum Anlegen der Betriebsspannung und/oder von Pulsen der Betriebsspannung an den Elektromotor (1), mit einer Ansteuerschaltung (5) für den elektronischen Schalter (4), mit einer Einrichtung (12) zur Voreinstellung einer Drehzahl, die eine in funktioneller Abhängigkeit von der einzustellenden Drehzahl stehende Sollwertspannung (Ust) erzeugt, mit einer Einrichtung (6) zur Messung einer das Drehmoment des Elektromotors (1) repräsentierenden Ist-Größe, die einem Ein/Ausgang (1, 2) der Ansteuerschaltung (5) zugeführt wird, wobei die Ansteuerschaltung (5) an einem Ein/Ausgang (5) einen in funktioneller Abhängigkeit von der das Drehmoment repräsentierenden Ist-Größe stehenden resultierenden Strom (Ir) zur Verfügung stellt, und wobei an einem Ein/Ausgang (4) der Ansteuerschaltung (5) eine aus dem resultierenden Strom (Ir) in Verbindung mit der Sollwertspannung (Ust) gebildete Steuerspannung (Up) eingespeist wird, so daß der Elektromotor (1) während der Betriebsphase mit einer variabel einstellbaren Drehzahl betreibbar ist, nach einem der Ansprüche 6 bis 8, dadurch gekennzeichnet, daß zwischen der Einrichtung (12) zur Voreinstellung der Drehzahl mit der Sollwertspannung (Ust) und dem Ein/Ausgang (4) der Ansteuerschaltung (5) zur Zuführung der Steuerspannung (Up) ein mit der Steuerspannung (Up) veränderlicher Widerstand (28) angeordnet ist.

10. Schaltungsanordnung nach Anspruch 9, dadurch gekennzeichnet, daß der veränderliche Widerstand (28) aus einem elektronischen Bauelement mit elektrischer Ventilwirkung, wie einer Diode, einem Transistor o. dgl. besteht, wobei insbesondere das elektronische Bauelement mit elektrischer Ventilwirkung in einem Netzwerk aus Festwiderständen (29, 30) befindlich ist, und wobei vorzugsweise der Potentiometerabgriff (31) des zur Erzeugung der Sollwertspannung (Ust) dienenden Potentiometers (13) mit dem elektronischen Bauelement mit elektrischer Ventilwirkung, gegebenenfalls über einen Anschluß am Netzwerk, in elektrischer Verbindung steht, und daß weiter vorzugsweise das Netzwerk aus einem von zwei Festwiderständen (29, 30) gebildeten Spannungsteiler besteht, wobei das elektronische Bauelement mit elektrischer Ventilwirkung am Verbindungspunkt (32) zwischen den beiden Festwiderständen (29, 30) angeschaltet ist.

## Claims

1. Method for the operation of an electric motor (1), in particular for use in an electric hand tool such as an electric screwdriver, accumulator drilling machine or similar, whereby the electric motor (1), which may be switched on and off manually, is operated during the operating phase (17) at a first rotational speed, possibly capable of being variably preset, until a limit torque capable of being preset is attained, wherein when the limit torque is attained, the electric motor (1) is switched over into a further operating phase, which lasts until the electric motor (1) is switched off, whereby the further operating phase comprises alternately recurring second and third phase segments, and whereby the electric motor is operated in the second phase segment at a second rotational speed for a torque pause (19) and also in a third phase segment at a third rotational speed for a secondary torque (20), in such a manner that in the further operating phase, a secondary torque (20), which is periodically interrupted by torque pauses (19), is exerted by the electric motor (1).

2. Method according to Claim 1, characterised in that the secondary torque (20) at least has the magnitude of the limit torque, and that preferably the secondary torque (20) and further preferred the torque pause (19), have a specific, possibly variably adjustable, length.

3. Method according to Claim 1 or 2, characterised in that the second rotational speed in the second phase segment, at which the electric motor (1) is operated during a second time span, is lower than the first rotational speed, and that the third rotational speed in the third phase segment, at which the electric motor (1) is operated during a third time span, is higher than the second rotational speed.

4. Method according to Claim 3, characterised in that the second rotational speed is equal to zero, that preferably the third rotational speed is equal to or higher than the first rotational speed, and that, further preferred, the second and/or third time span are capable of being variably preset by the user.

5. Method according to one of Claims 1 to 4, characterised in that the electric motor (1) exerts the secondary torque (20) in the further operating phase with a gentle run-up in that preferably after the second phase segment has ended the rotational speed is continuously increased from the second rotational speed to the third rotational speed with a course which may possibly be preset by the user.

6. Circuit arrangement for the operation of an electric motor (1), in particular according to the method of one of Claims 1 to 5, with an electric switch (3) for manually switching off and on an operating voltage for the electric motor (1), with an electronic switch (4) such as a power semiconductor for feeding the operating voltage and/or pulses of the operating voltage to the electric motor (1) so that the electric motor (1) may be operated during the operating phase at a first possibly variably adjustable rotational speed, with a means (6) for measuring an actual value representing the torque of the electric motor (1) and with a means (8) for presetting a desired value representing the limit torque and for switching off the electronic switch (4) upon attaining the limit torque corresponding to the desired value through the actual value,
wherein a means (21) for periodically switching the electronic switch (4) on again is arranged, whereby the means (21) is active upon attaining the limit torque in a further operating phase of the electric motor (1) until the electric switch (3) is switched off manually, whereby the further operating phase comprises alternately recurring second and third phase segments, and whereby the electronic switch (4) is actuated in the second phase segment at a second rotational speed for a torque pause (19) and also in the third phase segment at a third rotational speed for a secondary torque (20), in such a manner that in the further operating phase, secondary torques (20) with interposed torque pauses (19) are exerted by the electric motor (1).

7. Circuit arrangement according to Claim 6, characterised in that the electronic switch (4) is constructed as a triac, diac or similar, whereby alternating voltage is used as operating voltage for the electric motor (1), or that the electronic switch (4) is constructed as a transistor, such as a bipolar transistor, MOS-FET or similar, whereby direct voltage is used as operating voltage for the electric motor (1), that preferably a drive circuit, possibly constructed as an integrated circuit (5, 5'), for the electronic switch (4) is arranged for operation of the electric motor (1) at a first rotational speed and for switching the electronic switch (4) off upon attainment of the limit torque, and that, further preferred, the means (8) for presetting the desired value for the limit torque from a network is formed from a potentiometer (9), resistors (10) and a capacitor (11), whereby the network is connected in particular to inputs/outputs of the integrated circuit (5, 5').

8. Circuit arrangement according to Claim 6 or 7, characterised in that the means (21) for periodically switching the electronic switch (4) on again through an additional discharging branch for the capacitor (11) is in the means (8) for presetting the desired value for the limit torque, whereby the discharging branch is preferably directed back via an electronic component with electric valve effect such as a diode (22), a transistor or similar, onto an input/output at the integrated circuit (5, 5'), and whereby an additional circuit (24) equipped with an operation amplifier (26) connected onto the operational component with electrical valve effect can be arranged possibly between the input/output at the integrated circuit (5') and the capacitor (11).

9. Circuit arrangement for the operation of an electric motor (1) with an electronic switch (4) such as a power semiconductor for feeding the operating voltage and/or pulses of the operating voltage to the electric motor (1), with a drive circuit (5) for the electronic switch (4), with a means (12) for presetting a rotational speed, which generates a desired value voltage (Ust) standing in functional dependence on the rotational speed to be set, with a means (6) for measuring an actual value representing the torque of the electric motor (1) which is fed to an input/output (1, 2) of the drive circuit (5), whereby the drive circuit (5) makes available at an input/output (5) a resulting current (Ir) standing in functional dependence on the actual value representing the torque, and whereby a control voltage (Up) formed from the resulting current (Ir) in conjunction with the desired value voltage (Ust) is fed in at an input/output (4) of the drive circuit (5), so that the electric motor (1) may be operated with a variably adjustable rotational speed during the operating phase, according to one of Claims 6 to 8, characterised in that a resistor (28), which is variable with the control voltage (Up) is arranged between the means (12) for presetting the rotational speed with the desired value voltage (Ust) and the input/output (4) of the drive circuit (5) for feeding the control voltage (Up).

10. Circuit arrangement according to Claim 9, characterised in that the variable resistor (28) comprises an electronic component with electrical valve effect such as a diode, a transistor or similar, whereby in particular the electronic component with electrical valve effect is located in a network comprising fixed resistors (29, 30), and whereby preferably the potentiometer pickoff (31) of the potentiometer (13) serving to generate the desired value voltage (Ust) connects electrically to the electronic component with electrical valve effect, possibly via a connection to the network, and that, further preferred, the network comprises a voltage divider formed by two fixed resistors (29, 30), whereby the electronic component with electrical valve effect is connected at the connection point (32) between the two fixed resistors (29, 30).

## Revendications

1. Procédé pour le fonctionnement d'un moteur électrique (1), en particulier pour l'utilisation dans un outil électrique à main, comme un tournevis électrique, une perceuse à batteries, ou analogue, le moteur électrique (1) pouvant être mis en route et coupé manuellement étant mis en oeuvre pendant la phase de fonctionnement (17) à une première vitesse de rotation le cas échéant préréglable de façon variable, jusqu'à atteindre un couple limite préréglé,
dans lequel, lorsque le couple limite du moteur électrique (1) est atteint, on passe dans une autre phase de fonctionnement qui dure jusqu'à ce que le moteur électrique (1) soit coupé,
dans lequel l'autre phase de fonctionnement est constituée de deuxième et troisième parties de phase se répétant alternativement, et le moteur électrique (1) est mis en oeuvre, dans la deuxième partie de phase, à une deuxième vitesse de rotation pour une pause de couple (19), ainsi que, dans la troisième partie de phase, à une troisième vitesse de rotation pour un couple ultérieur (20),
de sorte qu'un couple ultérieur (20), qui est périodiquement interrompu par des pauses de couple (19), est exercé par le moteur électrique (1) dans l'autre phase de fonctionnement.

2. Procédé selon la revendication 1,
caractérisé en ce que le couple ultérieur (20) possède au moins la valeur du couple limite et en ce qu'avantageusement le couple ultérieur (20) et encore avantageusement la pause de couple (19) possèdent une longueur déterminée, le cas échéant réglable de façon variable.

3. Procédé selon la revendication 1 ou 2,
caractérisé en ce que la deuxième vitesse de rotation dans la deuxième partie de phase, à laquelle le moteur électrique (1) fonctionne pendant un deuxième intervalle de temps, est plus faible que la première vitesse de rotation, et en ce que la troisième vitesse de rotation dans la troisième partie de phase, à laquelle le moteur électrique (1) fonctionne pendant un troisième intervalle de temps, est plus grande que la deuxième vitesse de rotation.

4. Procédé selon la revendication 3,
caractérisé en ce que la deuxième vitesse de rotation est égale à zéro, en ce qu'avantageusement la troisième vitesse de rotation est égale ou supérieure à la première vitesse de rotation, et en ce qu'encore avantageusement les deuxième et/ou troisième intervalles de temps peuvent être pré-réglés de façon variable par l'utilisateur.

5. Procédé selon une des revendications 1 à 4,
caractérisé en ce que le moteur électrique (1), dans l'autre phase de fonctionnement, exerce le couple ultérieur (20) avec un démarrage doux, en ce qu'avantageusement, après achèvement de la deuxième partie de phase, la vitesse de rotation est augmentée de façon continue de la deuxième vitesse de rotation à la troisième vitesse de rotation avec un profil le cas échéant pouvant être prédéfini par l'utilisateur.

6. Agencement de circuit pour le fonctionnement d'un moteur électrique (1), en particulier selon le procédé d'une des revendications 1 à 5, comportant un commutateur électrique (3) pour la mise en circuit et hors circuit manuelle d'une tension de fonctionnement pour le moteur électrique (1), un commutateur électronique (4), comme un semi-conducteur de puissance, pour appliquer la tension de fonctionnement et/ou des impulsions de la tension de fonctionnement au moteur électrique (1), de sorte que le moteur électrique (1), pendant la phase de fonctionnement, peut être mis en oeuvre à une première vitesse de rotation le cas échéant réglable de façon variable, un dispositif (6) pour mesurer une grandeur réelle représentant le couple du moteur électrique (1), ainsi qu'un dispositif (8) pour prérégler une grandeur de consigne représentant le couple limite et mettre hors circuit le commutateur électronique (4) lorsque le couple limite est atteint, de façon correspondant à la grandeur de consigne, par la grandeur réelle,
dans lequel un dispositif (21) est prévu pour la remise en circuit périodique du commutateur électronique (4), le dispositif (21) étant actif après avoir atteint le couple limite dans une autre phase de fonctionnement du moteur électrique (1) jusqu'à la mise hors circuit manuelle du commutateur électrique (3),
dans lequel l'autre phase de fonctionnement est constituée de deuxième et troisième parties de phase se répétant alternativement, et
dans lequel le commutateur électronique (4) est commandé dans la deuxième partie de phase à une deuxième vitesse de rotation pour une pause de couple (19) ainsi que, dans la troisième partie de phase, à une troisième vitesse de rotation pour un couple ultérieur (20), de sorte que, dans l'autre phase de fonctionnement, des couples ultérieurs (20) avec des pauses de couple intermédiaires (19) sont exercés par le moteur électrique (1).

7. Agencement de circuit selon la revendication 6,
caractérisé en ce que le commutateur électronique (4) est réalisé comme triac, diac, ou analogue, une tension alternative étant utilisée comme tension de fonctionnement pour le moteur électrique (1), ou en ce que le commutateur électronique (4) est réalisé comme transistor, soit transistor bipolaire, MOS-FET (transistor MOS à effet de champ), ou analogue, une tension continue étant utilisée comme tension de fonctionnement pour le moteur électrique (1), en ce qu'avantageusement un circuit de commande réalisé le cas échéant comme circuit intégré (5,5') est prévu pour le commutateur électronique (4) pour le fonctionnement du moteur électrique (1) à une première vitesse de rotation et la mise hors circuit du commutateur électronique (4) lorsque le couple limite est atteint, et en ce qu'encore avantageusement le dispositif (8) pour prérégler la grandeur de consigne pour le couple limite est formé par un réseau constitué d'un potentiomètre (9), de résistances (10) et d'un condensateur (11), le réseau étant en particulier raccordé à des entrées/sorties du circuit intégré (5,5'),

8. Agencement de circuit selon la revendication 6 ou 7,
caractérisé en ce que le dispositif (21) pour la remise en circuit périodique du commutateur électronique (4) est constitué par une branche de décharge supplémentaire pour le condensateur (11) dans le dispositif (8) pour prérégler la grandeur de consigne pour le couple limite, la branche de décharge étant avantageusement ramenée, par l'intermédiaire d'une pièce électronique à effet de soupape électrique, comme une diode (22), un transistor, ou analogue, à une entrée/sortie sur le circuit intégré (5,5'), et, le cas échéant, un circuit supplémentaire (24) muni d'un amplificateur opérationnel (26), qui est raccordé à la pièce électronique à effet de soupape électrique, pouvant être agencé entre l'entrée/sortie sur le circuit intégré (5') et le condensateur (11).

9. Agencement de circuit pour le fonctionnement d'un moteur électrique (1), comportant un commutateur électronique (4), comme un semi-conducteur de puissance, pour appliquer la tension de fonctionnement et/ou des impulsions de la tension de fonctionnement au moteur électrique (1), un circuit de commande (5) pour le commutateur électronique (4), un dispositif (12) pour prérégler une vitesse de rotation, qui engendre une tension de consigne (Ust) dépendant de façon fonctionnelle de la vitesse de rotation à régler, un dispositif (6) pour mesurer une grandeur réelle représentant le couple du moteur électrique (1), qui est amenée à une entrée/sortie (1,2) du circuit de commande (5), le circuit de commande (5) fournissant, à une entrée/sortie (5), un courant résultant (Ir) dépendant de façon fonctionnelle de la grandeur réelle représentant le couple, et, à une entrée/sortie (4) du circuit de commande (5), une tension de commande (Up) formée du courant résultant (Ir) en liaison avec la tension de consigne (Ust) étant fournie, de sorte que le moteur électrique (1), pendant la phase de fonctionnement, peut être mis en oeuvre à une vitesse de rotation réglable de façon variable, selon une des revendications 6 à 8,
caractérisé en ce que, entre le dispositif (12) pour prérégler la vitesse de rotation avec la tension de consigne (Ust) et l'entrée/sortie (4) du circuit de commande (5) pour amener la tension de commande (Up), il est agencé une résistance (28) variable avec la tension de commande (Up).

10. Agencement de circuit selon la revendication 9,
caractérisé en ce que la résistance variable (28) est constituée d'un élément électronique à effet de soupape électrique, comme une diode, un transistor, ou analogue, l'élément électronique à effet de soupape électrique se trouvant en particulier dans un réseau de résistances fixes (29,30), et, avantageusement, la prise (31) du potentiomètre (13) servant à engendrer la tension de consigne (Ust) étant en liaison électrique avec l'élément électronique à effet de soupape électrique, le cas échéant par l'intermédiaire d'un raccord au réseau, et en ce qu'encore avantageusement le réseau est constitué d'un diviseur de tension formé de deux résistances fixes (29,30), l'élément électronique à effet de soupape électrique étant raccordé au point de liaison (32) entre les deux résistances fixes (29,30).
